# EUROPEAN PATENT APPLICATION

(11) **EP 1 793 647 A2**
(43) Date of publication of application: **06.06.2007**
(21) Application number: 06024834.1
(22) Date of filing: 30.11.2006
(51) Int. Cl.: H04R 5/04, H04S 7/00

(54) **Optical disk player**

(30) Priority: 02.12.2005 JP 2005348746
(71) Applicant: Funai Electric Co., Ltd., Daito-shi, Osaka 574-0013 (JP)
(72) Inventor: Hayashibara, Kazuki, Daito-shi Osaka 574-0013 (JP)
(74) Representative: Grünecker, Kinkeldey, Stockmair & Schwanhäusser Anwaltssozietät

(57) **Abstract**

When an optical disk player (1) is switched on, a main controller firstly obtains information of audio channels that an appliance connected to the optical disc player (1) supports through an HDMI cable (5).
Then, when a command for starting reproduction of the optical disc is inputted through the remote controller (4), the main controller judges whether at least one of channels of the sound source is not included in the channels that the connected appliance supports or not. When there is a channel which is not included in the channels that the connected appliance supports, the main controller starts to carry out the down-mixing process, and then the main controller starts to output the audio signals to the connected appliance. Alternatively, when there is no channel which is not included in the channels that the connected appliance supports, the main controller starts to output the audio signals to the connected appliance without carrying out the down-mix process.

## Description

### BACKGROUND OF THE INVENTION

### 1. Field of the Invention

The present invention relates to an optical disk player, an audio signal output device, and an AV system which output audio signals to an audio output amplifier through an HDMI (High-Definition Multimedia Interface) cable.

### 2. Description of the Related Art

Recently an optical disk such as a DVD (Digital Versatile Disk) or the like stores audio signals having more than two channels (hereinafter referred to as multichannel audio signals), and an optical disk player is adapted to reproduce the audio signals and outputs the audio signals through an audio output amplifier which supports such multichannel audio signals. The optical disk player and the audio output amplifier are generally connected to each other through an HDMI (High-Definition Multimedia Interface) cable.

Japanese Laid-Open Patent Publication No. 9-259539 shows a conventional optical disk player which reproduces data from an optical disk storing a surround control data indicating a speaker from which an audio should be outputted among speakers preliminarily positioned at fifteen places. The optical disk player comprises a down-mix circuit which converts demodulated audio signals into other audio signals for respective channels which the preset speakers support, and outputs the converted audio signals.

Japanese Laid-Open Patent Publication No. 2001-344906 shows another conventional optical disk player which outputs the multichannel audio signals with down-mixing into the two-channel audio signals when no down-mix coefficient is preliminary stored in an internal coefficient ROM of the optical disc player.

Japanese Laid-Open Patent Publication No. 2005-12534 shows a conventional audio appliance which carries out a speaker setting, which supports a pattern number stored in a memory.

However, when an audio output amplifier, which does not support the multichannel audio signals, is connected to any one of the conventional optical disk players described above, audio signals of unsupported audio channels are omitted, so that a powerful audio (sound) cannot be achieved even though an expensive DVD software is purchased. A similar problem occurs when speakers corresponding to the multichannel are not connected to an audio output amplifier, even when the audio output amplifier supports the multichannel.

Moreover, the optical disk player such as described in No. 9-259539 causes an increase of a manufacturing cost and a development cost, so that it is not appropriate to appliances for mass consumption.

### SUMMARY OF THE INVENTION

The present invention is conceived to solve the problem described above, and an object of the present invention is to provide an optical disk player which enables a powerful audio with a simple constitution at low cost, even when an audio output amplifier which does not support the multichannel is connected. Another object of the present invention is to provide an audio signal output device which can be used in the above optical disc player. Still another object of the present invention is to provide an AV system comprising the optical disc player, which enables a powerful audio with a simple constitution at low cost.

An optical disc player in accordance with an aspect of the present invention comprises: an optical pickup which reads out signals from an optical disc by irradiating a laser beam on the optical disk; a signal processing means which processes the signals read out by the optical pickup; a signal decoding means which decodes the signals processed by the signal processing means; an HDMI (High-Definition Multimedia Interface) output terminal to which an HDMI cable is connected and outputs the signals decoded by the signal decoding means to outside of the player through the HDMI cable; a control means which controls the optical pickup, the signal processing means, and the signal decoding means; and a command input means which is operated by a user to input a command.

When an appliance is connected to the HDMI output terminal through the HDMI cable, the control means obtains information of audio channels that the connected appliance supports. When a command to start playing of an optical disc is inputted through the command input means, the control means judges whether an audio channel or audio channels of a sound source is not or are not included in the information of channels that the connected appliance supports or not. When an audio channel or audio channels, which is not or are not included in the information of channels that the connected appliance supports, exists or exist, the control means starts to carry out a down-mixing process, and then the control means starts to output down-mixed audio signals to the connected appliance. When there is no audio channel which is not included in the information of channels that the connected appliance supports, the control means starts to output the audio signals to the connected appliance without carrying out the down-mix process.

According to such a constitution, the control means obtains the information of channels that the connected appliance supports, and when the audio channel of the sound source includes a channel or channels which is not or are not included in the information of the channels that the connected appliance supports, the control means carries out the down-mix process on the audio signals corresponding to the channels that the connected appliance supports, and subsequently, outputs the down-mixed audio signals to the connected appliance. Consequently, the audio signals of the channels that the connected appliance does not support can be reflected in the channels that the connected appliance supports, and thus the powerful audio can be achieved.

On the other hand, an audio signal output device in accordance with another aspect of the present invention comprises an HDMI output terminal to which an HDMI cable is connected and outputs audio signals to outside. When an appliance is connected to the HDMI output terminal through the HDMI cable, information of audio channels that the connected appliance supports is transmitted to the audio signal output device from the connected appliance through the HDMI cable. When audio channels of a sound source includes a channel or channels that the connected appliance does not support, audio signals of the sound source are down-mixed corresponding to the channels that the connected appliance supports, and the down-mixed audio signals are outputted to the connected appliance.

According to such a constitution, when the appliance is connected to the HDMI output terminal through the HDMI cable, the information of audio channels that the connected appliance supports is transmitted to the audio signal output device from the connected appliance through the HDMI cable. Thus, the audio signal output device can be judged whether the audio channels of the sound source includes a channel or channels that the connected appliance does not support or not. When the audio channels of the sound source includes at least a channel that the connected appliance does not support, the audio signals of the sound source are down-mixed corresponding to the channels that the connected appliance supports, and the down-mixed audio signals are outputted to the connected appliance. Consequently, the audio signals of the channels that the connected appliance does not support can be reflected in the channels which the connected appliance supports, and thus the powerful audio can be achieved. Moreover, the audio signal output device and the connected appliance can be connected to each other through the HDMI cable, so that the powerful audio can be achieved at relatively low cost.

Furthermore, an audio and visual system in accordance with still another aspect of the present invention comprises an optical disc player, an audio output amplifier connected through an HDMI (High-Definition Multimedia Interface) cable, and a speaker system connected to the audio output amplifier through normal speaker cables. When powers of the optical disc player and the audio output amplifier are switched on, information of channels that the audio output amplifier supports is transmitted to the optical disc player from the audio output amplifier through the HDMI cable. Channel composition of the speaker system can be inputted to the audio signal output device through a remote controller. The optical disc player compares audio channels of a sound source with channels that the audio output amplifier supports or channels that the speaker system supports. When the audio channels of the sound source includes a channel or channels that the audio output amplifier or the speaker system does not support, the audio signals of the sound source are down-mixed corresponding to the channels that the audio output amplifier or the speaker system supports, and the down-mixed audio signals are outputted to the audio output amplifier.

According to such a constitution, the AV system comprising the optical disk player and the audio signal output device described can be achieved.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG 1 is a diagram showing a constitution of a home theater system using an optical disk player in accordance with an embodiment of the present invention;
FIG 2 is a block diagram showing a constitution of an optical disk player applicable in the system;
FIG 3 is a diagram showing channels of audio signals which are outputted from the optical disk player to an audio output amplifier in case that various appliances are connected and various sound sources are reproduced; and
FIG 4 is a flowchart showing a down-mixing process in a main controller before starting to output the audio signals.

### DESCRIPTION OF THE PREFERRED EMBODIMENTS

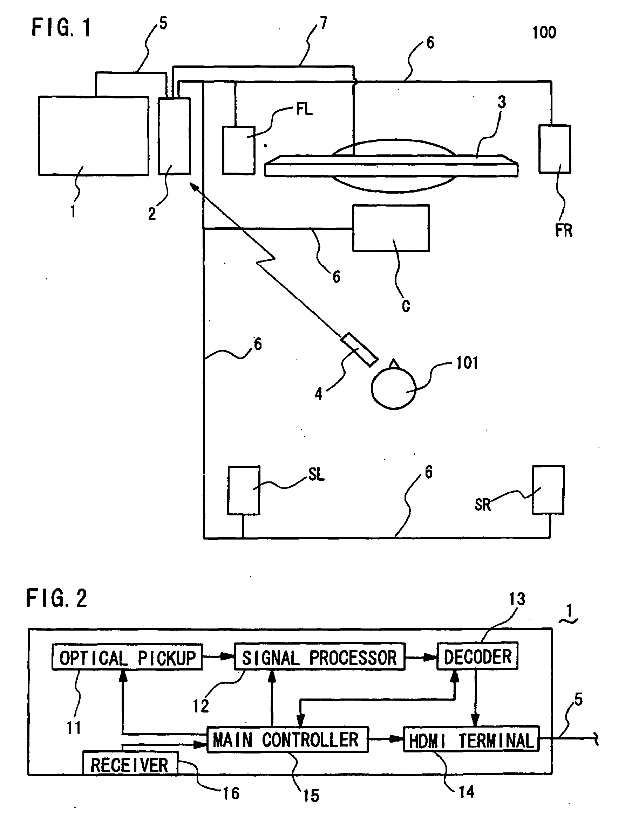

A preferred embodiment of the present invention is described with reference to the attached drawings. FIG 1 shows a constitution of an AV (Audio Visual) system 100 such as a home theater system using an optical disk player 1. The AV system 100 comprises the optical disk player 1 which reproduces video signals and audio signals recorded on an optical disk such as a DVD, an audio output amplifier 2 which is in compliance with five-channels, amplifies the audio signals reproduced by the optical disk player 1 and then outputs the amplified audio signals, a speaker FL (Front Left), a speaker FR (Front Right), a speaker C (Center), a speaker SL (Surround Left), and a speaker SR (Surround Right) which output sound in response to the audio signals outputted from the audio output amplifier 2, a monitor display device 3 such as an LCD (Liquid Crystal Display) device which displays an image on a screen in response to the video signals reproduced by the optical disk player 1, a remote controller 4 which is operated by a user 101 to input various commands to the optical disk player 1 and the audio output amplifier 2, and so on. The user 101 can make a choice of the speakers FL, FR, C, SL, and SR appropriate to the user's taste.

The optical disk player 1 is connected to the audio output amplifier 2 through an HDMI (High-Definition Multimedia Interface) cable 5, so that digital signals are transmitted from the optical disc player 1 to the audio output amplifier 2. The audio output amplifier 2 is connected to the respective speakers FL, FR, C, SL, and SR through normal speaker cables 6, and analog audio signals amplified through the audio output amplifier 2 are transmitted to the speakers FL, FR, C, SL, and SR. The audio output amplifier 2 is further connected to the monitor display device 3 through a video output cable 7 which is in compliance with digital signals or analog signals. Thus, the video signals are outputted to the monitor display device 3 through the audio output amplifier 2 from the optical disk player. Alternatively, the video signals may directly be outputted to the monitor display device 3 from the optical disk player 1.

FIG 2 shows a block configuration of the optical disk player 1. The optical disk player 1 comprises an optical pickup 11 which reads out signals from an optical disc with irradiating a laser beam on the optical disk, a signal processor (signal processing means) 12 which processes the signals, which are read out by the optical pickup 11, a decoder (signal decoding means) 13 which decodes the signals processed by the signal processor 12, an HDMI output terminal 14 to which the HDMI cable 5 is connected and then outputs the signals decoded by the decoder 13 to outside of the optical disc player 1, a main controller (control means) 15 which controls the optical pickup 11, the signal processor 12, and the decoder 13, a receiver 16 which receives a command transmitted from the remote controller 4, and so on.

The optical disk player 1 of this embodiment has a function to down-mix audio signals and to output the down-mixed audio signals corresponding to a number of channels that the audio output amplifier 2 supports or a number of speakers which are connected to the audio output amplifier 2. The user can enable or disable this function by operating the remote controller 4.

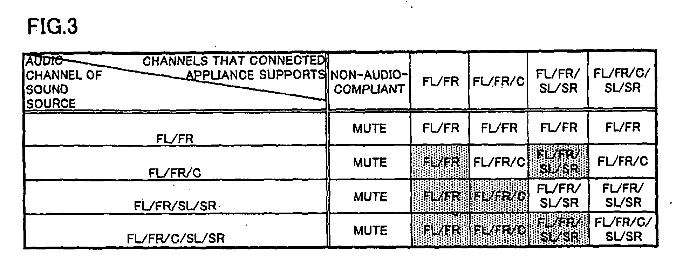

FIG 3 shows channels of the audio signals which are outputted from the optical disk player 1 to the audio output amplifier 2. The channels of the audio signals outputted from the optical disc player 1 to an appliance connected thereto (for example, the audio output amplifier 2 in the home theater system shown in FIG 1), are different corresponding to audio channels of a sound source and the channels that the connected appliance supports or speaker system which is connected to the appliance.

For example, when a video projector (image projecting device) is connected to the AV system 100 as the monitor display device 3 and the projector is not connected to the audio output amplifier 2, no audio signal is outputted from the optical disc player 1 because the video projector generally does not support the audio signals.

Alternatively, it is assumed that an LCD device is directly connected to the optical disc player 1 instead of the AV system 100, and the LCD supports only two channels (FL/FR) and the audio channels of the sound source are three channels (FL/FR/C), four channels (FL/FR/SL/SR), or five channels (FL/FR/C/SL/SR), the optical disk player 1 outputs the two channels (FL/FR) of the audio signals down-mixed to the LCD. At this time, audio signals which should be outputted from the speakers C or SL/SR are mixed into the audio signals which are outputted from the speaker FL/FR.

Alternatively, it is assumed that an audio system or an AV system which supports three channels (FL/FR/C) is connected to the optical disc player 1, and the audio channels of the sound source are four channels (FL/FR/SL/SR) or five channels (FL/FR/C/SL/SR), the optical disk player 1 outputs the three channels (FL/FR/C) of the audio signals down-mixed to the audio system. At this time, audio signals which should be outputted from the speakers SL/SR are mixed into the audio signals which are outputted from the speaker FL/FR.

Similarly, when the audio system or the AV system supports four channels (FL/FR/SL/SR) and the audio channels of the sound source are three channels (FL/FR/C) or five channels (FL/FR/C/SL/SR), the optical disk player 1 outputs the two channels (FL/FR) or the four channels (FL/FR/SL/SR) of the audio signals down-mixed to the LCD. At this time, audio signals which should be outputted from the speaker C are mixed into the audio signals which are outputted from the speaker FL/FR.

As described above, with respect to combinations indicated by a grey color in a table shown in FIG. 3, the audio signals of the audio channels which are included in the sound source but not supported by the connected appliance are outputted with being mixed into the audio signals of audio channels which are supported by the connected appliance. When the connected appliance supports the five channels (FL/FR/C/SL/SR), the audio signals are outputted from the optical disk player 1 to the connected appliance without being dawn-mixed.

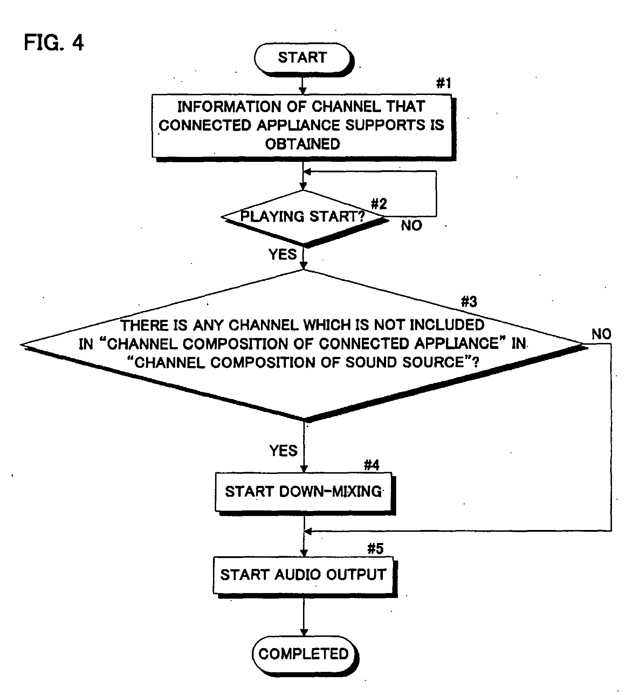

FIG 4 shows a process in the main controller 15 before starting to output the audio signals. When powers of the optical disk player 1 and the connected appliance are switched on, the main controller 15 firstly obtains information of audio channels that the connected appliance supports through the HDMI cable 5 (step #1). In other words, the connected appliance has a function to transmit the information of audio channels to the optical disc player 1 through the HDMI cable 5.

When a command to start playing of the optical disc is inputted by the user through the remote controller 4 (YES in step #2), the main controller 15 judges whether at least one of audio channels of the sound source is not included in the channels that the connected appliance supports or not (step #3). When an audio channel or audio channels, which is not or are not included in the audio channels that the connected appliance supports, exists or exist (YES in step #3), the main controller 15 starts to carry out the down-mixing process (step #4), and then the main controller 15 starts to output the down-mixed audio signals to the connected appliance (#5). Alternatively, when there is no audio channel which is not included in the channels that the connected appliance supports (NO in step #3), the main controller 15 starts to output the audio signals to the connected appliance without carrying out the down-mix process (step #5).

Although the process to carry out the down-mixing process with comparing the channel composition of the connected appliance with the channel composition of the sound source is described in FIG. 4, the same goes for the case where the down-mixing process is carried out with comparing the channel composition of the speakers with the channel composition of the sound source. Hereupon, the channel composition of the speaker system, which is connected to the connected appliance, can be inputted to the optical disc player 1 or the connected appliance, that is, the audio output amplifier 2, by the user through operations of the remote controller 4.

As described above, according to the optical disk player 1 of this embodiment, the main controller 15 obtains the information of the channels that the connected appliance supports, and when the audio channels of the sound source includes an audio channel or audio channels which are not included in the information of the channels of the connected appliance, the main controller 15 carries out the down-mix process on the audio signals corresponding to the channels that the connected appliance supports, and subsequently, outputs the down-mixed audio signals to the connected appliance. Consequently, the audio signals of the channels that the connected appliance does not support can be reflected in the channels that the connected appliance supports, and thus, the powerful audio can be achieved. Moreover, since the main controller 15 obtains the information of channels with regard to the speakers which are connected to the connected appliance, and also carries out the process similar to the above description, the audio signals of the audio channels with the speakers non-connected can be reflected in the channels with the speakers connected, and thus, the powerful audio can be achieved. Furthermore, the audio output amplifier 2 which can be connected to the optical disk player 1 supports the five channels, and the optical disk player 1 and the audio output amplifier 2 can be connected to each other through the HDMI cable 5, so that the powerful audio can be achieved at relatively low cost.

The present invention is not limited to the constitution of the embodiment described above, however, any constitution is applicable if it obtains information of channels that the connected appliance connected through an HDMI cable supports, carries out the down-mixing process in the audio signals corresponding to the channels that the connected appliance supports, and subsequently outputs the down-mixed audio signals. Moreover, the present invention is not limited to the optical disk player, however, it is widely applicable to an audio signal output device which supports the multichannel (a television broadcasting receiver, for example). Furthermore, it is not only the five channels that the audio output amplifier which can be connected to the optical disk player 1 supports, however, the audio output amplifier can also support the three channels, the four channels, or the 5.1 channels.

The optical disk player in accordance with the present invention may comprise at least an optical pickup which reads out signals from an optical disc by irradiating a laser beam on the optical disk, a signal processing means which processes the signals read out by the optical pickup, a signal decoding means which decodes the signals processed-by the signal processing means, an HDMI (High-Definition Multimedia Interface) output terminal to which an HDMI cable is connected and outputs the signals decoded by the signal decoding means to outside of the player through the HDMI cable, a control means which controls the optical pickup, the signal processing means, and the signal decoding means, and a command input means which is operated by a user to input a command.

When an appliance is connected to the HDMI output terminal through the HDMI cable, the control means obtains information of audio channels that the connected appliance supports. When a command to start playing of an optical disc is inputted through the command input means, the control means judges whether an audio channel or audio channels of a sound source is not or are not included in the information of channels that the connected appliance supports or not. When an audio channel or audio channels, which is not or are not included in the information of channels that the connected appliance supports, exists or exist, the control means starts to carry out a down-mixing process, and then the control means starts to output down-mixed audio signals to the connected appliance. When there is no audio channel which is not included in the information of channels that the connected appliance supports, the control means starts to output the audio signals to the connected appliance without carrying out the down-mix process.

In the above mentioned constitution, it is preferable that an audio output amplifier, which is incompliance with five channels, is connectable to the HDMI output terminal through the HDMI cable.

Furthermore, it is preferable that channel composition of a speaker system, which is connected to the connected appliance, is inputted to the optical disc player or the connected appliance through the command input means. When the command to start playing of an optical disc is inputted through the command input means, the control means judges whether an audio channel or audio channels of the sound source is not or are not included in channels that the speaker system supports or not. When an audio channel or audio channels, which is not or are not included in the channels that the speaker system supports, exists or exist, the control means starts to carry out a down-mixing process, and then the control means starts to output down-mixed audio signals to the connected appliance. When there is no audio channel which is not included in the channels that the speaker system supports, the control means starts to output the audio signals to the connected appliance without carrying out the down-mix process.

An audio signal output device in accordance with the present invention may comprise an HDMI output terminal to which an HDMI cable is connected and outputs audio signals to outside. When an appliance is connected to the HDMI output terminal through the HDMI cable, information of audio channels that the connected appliance supports is transmitted to the audio signal output device from the connected appliance through the HDMI cable. When audio channels of a sound source includes a channel or channels that the connected appliance does not support, audio signals of the sound source are down-mixed corresponding to the channels that the connected appliance supports, and the down-mixed audio signals are outputted to the connected appliance.

It is preferable that channel composition of a speaker system, which is connected to the connected appliance, can be further inputted to the audio signal output device through a remote controller. When audio channels of a sound source includes a channel or channels that the speaker system does not support, audio signals of the sound source are down-mixed corresponding to the channels that the speaker system supports, and the down-mixed audio signals are outputted to the connected appliance.

An audio and visual system in accordance with the present invention may comprise an optical disc player, an audio output amplifier connected through an HDMI cable, and a speaker system connected to the audio output amplifier through normal speaker cables. When powers of the optical disc player and the audio output amplifier are switched on, information of channels that the audio output amplifier supports is transmitted to the optical disc player from the audio output amplifier through the HDMI cable. Channel composition of the speaker system can be inputted to the audio signal output device through a remote controller. The optical disc player compares audio channels of a sound source with channels that the audio output amplifier supports or channels that the speaker system supports. When the audio channels of the sound source includes a channel or channels that the audio output amplifier or the speaker system does not support, the audio signals of the sound source are down-mixed corresponding to the channels that the audio output amplifier or the speaker system supports, and the down-mixed audio signals are outputted to the audio output amplifier.

This application is based on Japanese patent application 2005-348746 filed December 2, 2005 in Japan, the contents of which are hereby incorporated by references.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. An optical disk player comprising:
an optical pickup which reads out signals from-an optical disc by irradiating a laser beam on the optical disk;
a signal processing means which processes the signals read out by the optical pickup;
a signal decoding means which decodes the signals processed by the signal processing means;
an HDMI (High-Definition Multimedia Interface) output terminal to which an HDMI cable is connected and outputs the signals decoded by the signal decoding means to outside of the player through the HDMI cable;
a control means which controls the optical pickup, the signal processing means, and the signal decoding means; and
a command input means which is operated by a user to input a command, wherein
when an appliance is connected to the HDMI output terminal through the HDMI cable, the control means obtains information of audio channels that the connected appliance supports;
when a command to start playing of an optical disc is inputted through the command input means, the control means judges whether an audio channel or audio channels of a sound source is not or are not included in the information of channels that the connected appliance supports or not;
when an audio channel or audio channels, which is not or are not included in the information of channels that the connected appliance supports, exists or exist, the control means starts to carry out a down-mixing process, and then the control means starts to output down-mixed audio signals to the connected appliance; and
when there is no audio channel which is not included in the information of channels that the connected appliance supports, the control means starts to output the audio signals to the connected appliance without carrying out the down-mix process.

2. The optical disc player in accordance with claim 1, wherein
an audio output amplifier, which is incompliance with five channels, is connectable to the HDMI output terminal through the HDMI cable.

3. The optical disc player in accordance with claim 1, wherein
channel composition of a speaker system, which is connected to the connected appliance, is inputted to the optical disc player or the connected appliance through the command input means; and
when the command to start playing of an optical disc is inputted through the command input means, the control means judges whether an audio channel or audio channels of the sound source is not or are not included in channels that the speaker system supports or not;
when an audio channel or audio channels, which is not or are not included in the channels that the speaker system supports, exists or exist, the control means starts to carry out a down-mixing process, and then the control means starts to output down-mixed audio signals to the connected appliance; and
when there is no audio channel which is not included in the channels that the speaker system supports, the control means starts to output the audio signals to the connected appliance without carrying out the down-mix process.

4. An audio signal output device comprising an HDMI (High-Definition Multimedia Interface) output terminal to which an HDMI cable is connected and outputs audio signals to outside, wherein
when an appliance is connected to the HDMI output terminal through the HDMI cable, information of audio channels that the connected appliance supports is transmitted to the audio signal output device from the connected appliance through the HDMI cable; and
when audio channels of a sound source includes a channel or channels that the connected appliance does not support, audio signals of the sound source are down-mixed corresponding to the channels that the connected appliance supports, and the down-mixed audio signals are outputted to the connected appliance.

5. The audio signal output device in accordance with claim 4, wherein
channel composition of a speaker system, which is connected to the connected appliance, can be further inputted to the audio signal output device through a remote controller; and
when audio channels of a sound source includes a channel or channels that the speaker system does not support, audio signals of the sound source are down-mixed corresponding to the channels that the speaker system supports, and the down-mixed audio signals are outputted to the connected appliance.

6. An audio and visual system comprising an optical disc player, an audio output amplifier connected through an HDMI (High-Definition Multimedia Interface) cable, and a speaker system connected to the audio output amplifier through normal speaker cables, wherein
when powers of the optical disc player and the audio output amplifier are switched on, information of channels that the audio output amplifier supports is transmitted to the optical disc player from the audio output amplifier through the HDMI cable;
channel composition of the speaker system can be inputted to the audio signal output device through a remote controller;
the optical disc player compares audio channels of a sound source with channels that the audio output amplifier supports or channels that the speaker system supports;
when the audio channels of the sound source includes a channel or channels that the audio output amplifier or the speaker system does not support, the audio signals of the sound source are down-mixed corresponding to the channels that the audio output amplifier or the speaker system supports, and the down-mixed audio signals are outputted to the audio output amplifier.
